# EUROPÄISCHE PATENTANMELDUNG

(11) **EP 2 397 712 A1**
(43) Veröffentlichungstag der Anmeldung: **21.12.2011**
(21) Anmeldenummer: 10166642.8
(22) Anmeldetag: 21.06.2010
(51) Int. Cl.: F16C 29/04, F16C 33/38

(54) **Linearführung mit zwangsgeführtem Käfig**

(71) Anmelder: Aktiebolaget SKF, 415 50 Göteborg (SE)
(72) Erfinder: Andersson, Leif A., 97711 Massbach (DE)
(74) Vertreter: Schonecke, Mitja

(57) **Zusammenfassung**

Eine Linearführung mit zwangsgeführtem Käfig (5) umfasst wenigstens zwei sich gegenüber liegende Laufschienen (1, 1'), die über Wälzkörper (3) gegeneinander verschiebbar gelagert sind, wobei die Wälzkörper (3) in wenigstens einem zwangsgeführtem Käfig (5) angeordnet sind, wobei die Zwangsführung wenigstens ein mit dem Käfig (5) verbundenes Zwangsführungselement aufweist, dass mit wenigstens zwei, jeweils einer der Laufschienen (1, 1') zugeordneten Eingriffsmitteln in Wirkkontakt steht, wobei die Eingriffsmittel entlang der einer Verschiebungsrichtung der Laufschienen (1, 1') axial ausgedehnt sind, wobei die Laufschienen (1, 1') jeweils wenigstens eine axial ausgedehnte Ausnehmung (9, 9') aufweisen. Die Ausnehmung (9, 9') schließt sich an eine der jeweils anderen Laufschiene (1, 1') gegenüber liegenden Stirnfläche der Laufschiene (1, 1') an und erstreckt sich parallel zu einer Seitenfläche der Laufschiene (1, 1'), wobei die Eingriffsmittel in der Ausnehmung (9, 9') gehaltert sind.

## Beschreibung

Die vorliegende Erfindung betrifft eine Linearführung mit zwangsgeführtem Käfig, umfassend wenigstens zwei sich gegenüberliegende Laufschienen, die über Wälzkörper gegeneinander verschiebbar gelagert sind, wobei die Wälzkörper in wenigstens einem zwangsgeführten Käfig angeordnet sind, wobei die Zwangsführung wenigstens ein mit dem Käfig verbundenes Zwangsführungselement aufweist, das mit wenigstens zwei, jeweils einer der Laufschienen zugeordneten Eingriffsmitteln in Wirkkontakt steht, wobei die Eingriffsmittel entlang der Laufschienen axial ausgedehnt sind.

Zur Vermeidung des bei Linearführungen auftretenden Käfigwanderns ist es bekannt, den Käfig in Relation zu den Führungsschienen zwangszuführen. Ein entsprechender Mechanismus für eine Linearführung ist beispielsweise in der DE 11 92 462 offenbart. Jede der gegeneinander verschiebbaren Laufschienen ist mit einer Zahnstange verbunden, in die ein mit dem Käfig verbundenes Zahnrad eingreift. Die relative Bewegung des Käfigs und damit der durch ihn geführten Wälzkörper ist somit festgelegt, so dass unbeabsichtigt auftretendes Käfigwandern unterbunden wird.

Eine vergleichbare Zwangsführung ist in der DE 198 15 525 A1 offenbart. Auch hier weist der Käfig ein mit ihm verbundenes Zahnrad auf, dessen Zahnung aus am

Umfang verteilten axial überstehenden Vorsprüngen besteht. In die Führungsschienen der Linearführung sind in gleichmäßigen Abständen hintereinander Ausnehmungen angeordnet, in die die überstehenden Vorsprünge des Zahnrads eingreifen und so die Zwangsführung des Käfigs in Bezug auf die Führungsschienen gewährleisten.

Eine weitere Linearführung ist aus der EP 1 236 912 B1 bekannt. Die offenbarte Linearführung umfasst zwei Laufschienen, die über Wälzkörper gegeneinander verschiebbar gelagert sind. Die Wälzkörper sind in einem gemeinsamen Käfig geführt, wobei der Käfig wiederum eine Zwangsführung aufweist. Die Laufschienen der Linearführung sind beabstandet angeordnet, wobei ein Spalt entsteht, der durch die Dimensionierung der Wälzkörper festgelegt ist. Mit jeder der Laufschienen ist eine sich axial erstreckende gewinkelt ausgeführte Zahnstange verbunden, die mit einem Zahnrad in Wirkkontakt steht, das im Käfig drehbar gelagert ist. Auf diese Art wird eine Zwangsführung des Käfigs erreicht, so dass unerwünschtes Käfigwandern unterdrückt wird. Die gewinkelten Zahnstangen umfassen einen Befestigungsabschnitt, mittels dem sie an jeweils einer Seitenfläche der korrespondierenden Laufschiene befestigt sind. Der bezüglich des Befestigungsabschnitts abgewinkelt angeordnete Zahnstangenabschnitt ragt hingegen in den Spalt zwischen den beiden Laufschienen.

Ebenfalls ist in der EP 1 236 912 B1 eine ähnlich geartete Linearführung offenbart, bei der die Zahnstangen ebenfalls gewinkelt ausgeführt sind und jeweils an zwei Seiten der Laufschiene befestigt sind. Jeder der zueinander abgewinkelt angeordneten Abschnitte der Zahnstange weist Ausformungen auf, die mit korrespondierenden Ausnehmungen in den Laufschienen in Wirkeingriff bringbar sind, so dass eine Befestigung der Zahnstange an der jeweiligen Laufschiene möglich ist. Die Zahnstangen sind folglich an die jeweilige Laufschiene einklipsbar, wodurch die Ausformungen der Zahnstange mit den jeweiligen Ausnehmungen der Laufschiene in Eingriff kommen und die Zahnstange somit gehaltert wird.

Aus der JP 2005-113939 A ist ebenfalls eine Linearführung mit zwangsgeführtem Käfig bekannt. Eine Zahnstange ist an einer Seitenfläche einer der Laufschienen befestigt. Über zwei durch einen Schaft verbundene Zahnräder steht ein Käfig der Linearführung mit der Zahnstange in Wirkeingriff, so dass eine Zwangsführung des Käfigs erzielt wird.

Aus der DD 130 994 ist eine Wälzführung mit zwangsgeführtem Wälzkäfig bekannt, wobei eine Zahnradeinheit mit einer Drehachse entsprechend dem Abstand zwischen zwei Schienen an einer der Schienen drehbar gelagert ist und in eine seitliche Verzahnung des Käfigs sowie in eine an der anderen Schiene ausgebildete Zahnstange eingreift.

Die bekannten Linearführungen mit zwangsgeführtem Käfig zeichnen sich im Allgemeinen durch einen komplexen oder unkompakten Aufbau aus. Es ist Aufgabe der vorliegenden Erfindung, eine alternative Linearführung mit zwangsgeführtem Käfig anzugeben, die besonders einfach und kompakt aufgebaut ist.

Diese Aufgabe wird durch eine Linearführung mit den Merkmalen des Patentanspruchs 1 gelöst. Vorteilhafte Ausgestaltungen der Erfindung sind Gegenstand der abhängigen Patentansprüche.

Gemäß Patentanspruch 1 wird eine Linearführung mit zwangsgeführtem Käfig angegeben, umfassend wenigstens zwei sich gegenüberliegende Laufschienen, die über Wälzkörper gegeneinander verschiebbar gelagert sind. Die Wälzkörper sind in wenigstens einem zwangsgeführten Käfig angeordnet, wobei die Zwangsführung wenigstens ein mit dem Käfig verbundenes Zwangsführungselement aufweist, das mit wenigstens zwei, jeweils einer der Laufschienen zugeordneten Eingriffsmitteln in Wirkkontakt steht. Die Eingriffsmittel sind entlang der Verschiebungsrichtung der Laufschienen axial ausgedehnt, wobei die Laufschienen jeweils wenigstens eine axial ausgedehnte Ausnehmung aufweisen. Die Ausnehmung schließt sich an eine der jeweils anderen Laufschiene gegenüber liegenden Stirnfläche der Laufschiene an und erstreckt sich parallel zu einer Seitenfläche der Laufschiene. Die Eingriffsmittel sind in der Ausnehmung gehaltert. Eine derartige Linearführung zeichnet sich durch eine besonders kompakte Bauform aus. Die bei bekannten Linearführungen offenbarten Eingriffsmittel sind im Allgemeinen seitlich der Laufschiene befestigt, wodurch sich der Aufbau in parallel zur Stirnfläche liegender Richtung vergrößert. Gemäß der vorliegenden Erfindung ist jedoch eine Ausnehmung vorgesehen, in der die Eingriffsmittel derart angeordnet sind, dass sie parallel zur Ebene der Stirnfläche der sich gegenüberliegenden Laufschienen nicht über die Ausdehnung der Laufschiene hinaus ragen. Dadurch ergibt sich die kompakte Bauform.

In einer vorteilhaften Ausgestaltung der Erfindung ist jedes Eingriffsmittel in einer einzigen Ausnehmung gehaltert. Diese Ausführung ist besonders einfach gestaltet, da die Größe der Ausnehmung beispielsweise an die Größe des Eingriffsmittels angepasst ist, was den Fertigungsaufwand für die Einzelteile der Linearführung reduziert.

In einer vorteilhaften Ausgestaltung der Erfindung sind die Laufschienen beabstandet angeordnet, wodurch ein Spalt definiert wird. Jedes der Eingriffsmittel ist derart angeordnet, dass ein mit dem Zwangsführungselement in Wirkkontakt stehender Abschnitt des Eingriffsmittels im Spalt angeordnet ist. Das Eingriffsmittel ist folglich an einer der Laufschienen befestigt und ragt in den Spalt zwischen den Laufschienen, in dem sich auch die Wälzkörper und der Käfig mit dem Zwangsführungselement befinden. Folglich ist es auf einfache Weise möglich, einen Wirkkontakt zwischen dem Zwangsführungselement und dem entsprechenden Abschnitt des Eingriffsmittels im Spalt herzustellen. Der konstruktive Aufwand für die entsprechend ausgebildete Linearführung ist somit geringer als bei bekannten Lösungen, ohne Einschränkungen bezüglich der kompakten Bauweise hinnehmen zu müssen.

Vorteilhaft ist eine Ausgestaltung der Erfindung derart, dass die zu den beiden Laufschienen korrespondierenden Eingriffsmittel auf gegenüberliegenden Seiten des Zwangsführungselements angeordnet sind. Insbesondere im Fall eines einfach ausgebildeten, symmetrisch aufgebauten Zwangsführungselements lässt sich so auf einfache Weise ein gleichzeitiger Wirkkontakt des Zwangsführungselements mit beiden Eingriffsmitteln und damit mit beiden Laufschienen herstellen.

In einer vorteilhaften Ausgestaltung der Erfindung ist das Zwangsführungselement als Zahnrad und die Eingriffsmittel als Lochblech ausgeführt. Das Zahnrad ist dabei derart gestaltet, dass seine Zähne zum Lochblech korrespondierend ausgebildet sind, so dass ein reibungsarmer Wirkkontakt zwischen dem Zahnrad und dem Lochblech sichergestellt ist. Das Lochblech lässt sich auf einfache Weise per Massenfertigung mit nahezu beliebiger Länge herstellen. Es weist einen Abschnitt mit den Löchern zur Herstellung des Wirkkontakts mit dem entsprechend ausgestalteten Zahnrad auf. Daran anschließend befindet sich ein Befestigungsabschnitt, mittels dem das Lochblech vorzugsweise auf seiner gesamten Länge mit der Ausnehmung in der Laufschiene verbunden ist. Der Wirkabschnitt des Lochblechs ragt über den Spalt zwischen den Laufschienen, in dem auch der Käfig mit dem Zahnrad angeordnet ist. Eine derart ausgebildete Laufschiene ist besonders aufwandsarm herstellbar.

Weitere Vorteile und Ausgestaltungen der Erfindung ergeben sich aus dem nachfolgend beschriebenen Ausführungsbeispiel im Zusammenhang mit den beigefügten

Figuren. Es zeigen:
- Figur 1: eine Seitenansicht einer Laufschiene,
- Figur 2: eine Aufsicht einer Linearführung mit Laufschienen der Figur 1 und
- Figur 3: eine Schnittdarstellung der Linearführung der Figur 2.

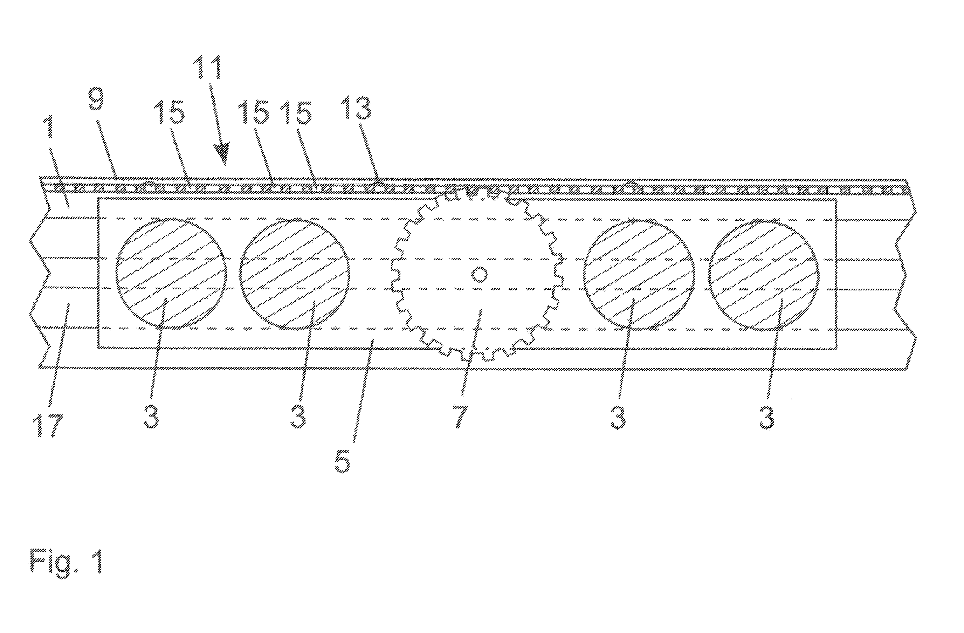

In der Figur 1 ist als Teil einer Linearführung eine Laufschiene 1 dargestellt. Auf die Darstellung der gegenüber liegenden Laufschiene wurde aus Übersichtlichkeitsgründen verzichtet, damit der zwischen den Laufschienen angeordnete Käfig mit der Zwangsführung darstellbar ist.

Die Laufschiene 1 ist gegenüber der nicht dargestellten Laufschiene über Wälzkörper linearverschiebbar gelagert. Die Wälzkörper sind im vorliegenden Ausführungsbeispiel als Kugeln 3 ausgeführt. Es sind weitere Ausführungsmöglichkeiten mit andersartigen Wälzkörpern, wie beispielsweise Zylinder- oder Kegelrollen möglich. Die Laufschienen 1 sind entsprechend auszubilden. Die Laufschiene 1 weist eine den Kugelnabmessungen entsprechend ausgebildete Lauffläche 17 auf. Die Kugeln 3 der Linearführung sind in einem hier nur schematisch angedeuteten Käfig 5 geführt. Sie sind somit bezüglich ihres relativen Abstands untereinander fixiert. Zwischen zwei der Kugeln 3 ist ein Zahnrad 7 angeordnet. Das Zahnrad 7 liegt parallel zur Bewegungsebene des Käfigs 5. Es ist drehbar mit dem Käfig 5 verbunden. An der Laufschiene 1 ist eine Ausnehmung 9 ausgebildet. Die Ausnehmung 9 kann beispielsweise durch einen Materialabtrag erzeugt werden und hat im vorliegenden Ausführungsbeispiel die Form einer Abkantung. In der Ausnehmung 9 ist ein Lochblech 11 befestigt.

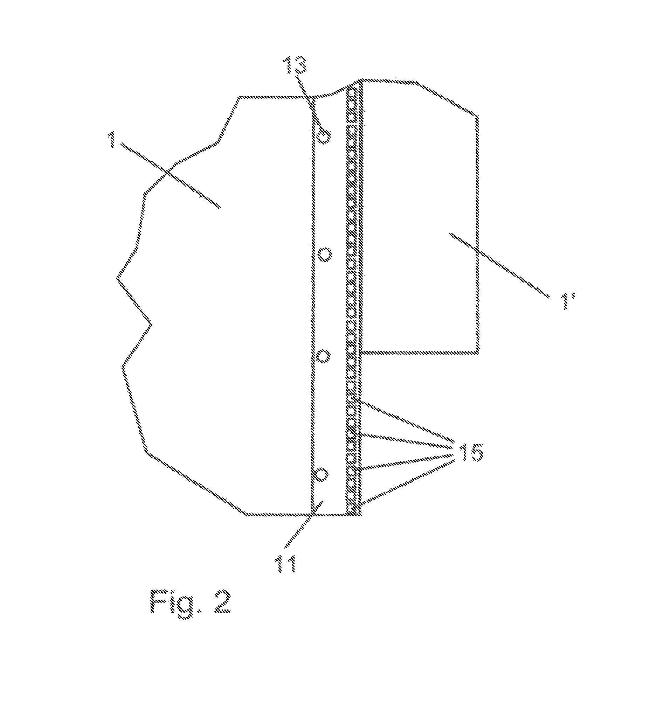

Das Lochblech 11 ist in der Figur 2 nochmals detailliert dargestellt. Hier ist zusätzlich die der Laufschiene 1 gegenüberliegende Laufschiene 1' gezeigt. Das Lochblech 11 ist derart ausgestaltet, dass es einen Befestigungsabschnitt umfasst, der wiederum Schraublöcher 13 aufweist. Durch die Schraublöcher 13 ist das Lochblech 11 mittels Schrauben mit der Laufschiene 1 fest verbunden. Alternativ lassen sich Lochblech 11 und Laufschiene 1 auch verkleben oder verschweißen oder mittels Stiften oder Nieten verbinden. Das Lochblech 11 weist senkrecht zur Bewegungsrichtung der Laufschiene 1 angeordnete Löcher 15 auf, die über den Rand der Laufschiene 1 hinaus in den Zwischenraum zwischen den Laufschienen 1 und 1' hineinragen..

In der Figur 1 ist dargestellt, dass die Löcher 15 mit dem parallel zur Stirnseite der Laufschiene 1 angeordneten Zahnrad 7 in Wirkkontakt treten können. Bei einer Bewegung der Laufschiene 1 relativ zum Käfig 5 dreht sich das Zahnrad 7 aufgrund des erzwungenen Eingriffs seiner Zähne in die Löcher 15 des Lochblechs 11. Dadurch wird die Bewegung des Käfigs 5 eingeschränkt. Auf diese Weise ergibt sich eine Zwangsführung des Käfigs 5, so dass unerwünschtes Käfigwandern verhindert wird.

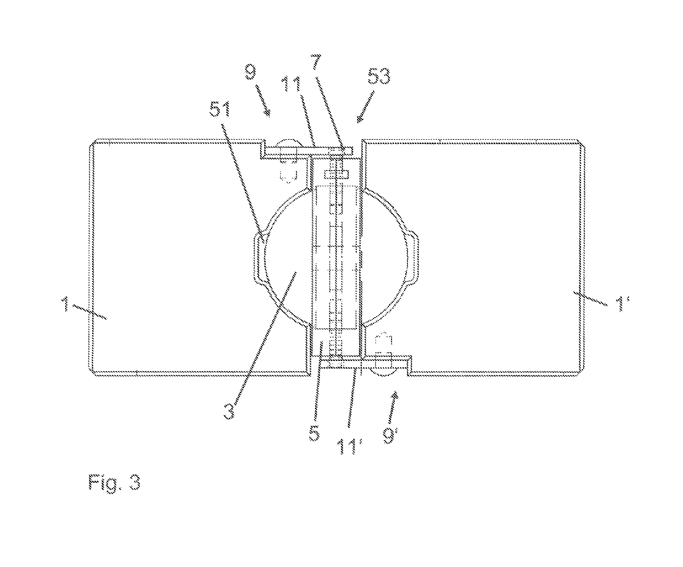

In der Figur 3 ist eine Schnittdarstellung der Linearführung aus der Figur 1 dargestellt. In diesem Fall sind zwei Laufschienen 1 und 1' dargestellt, die sich gegenüberliegen. Jede der Laufschienen 1 und 1' weist eine nutförmige Ausnehmung 51 auf. In der jeweiligen Ausnehmung 51 der Laufschienen 1 und 1' sind die ebenfalls als Kugeln 3 ausgebildeten Wälzkörper gelagert. Die nutförmigen Ausnehmungen 51 bilden dabei eine Anlauffläche für die Kugeln 3, so dass die Laufschienen 1 und 1' senkrecht zur Zeichnungsebene linear gegeneinander verschiebbar gelagert sind. Senkrecht zur Zeichnungsebene sind mehrere Kugeln 3 hintereinander in einem Käfig 5 zusammengeführt. Der Käfig 5 umfasst ein mit ihm drehbar verbundenes Zahnrad 7, das senkrecht zur Zeichnungsebene ausgerichtet ist. An der Laufschienen 1 bzw. 1' ist eine Ausnehmung 9 bzw. 9' ausgebildet, in der jeweils ein senkrecht zur Zeichnungsebene axial sich erstreckendes Lochblech 11 bzw. 11' befestigt ist. Die Tiefe der Ausnehmung 9 bzw. 9' innerhalb der Zeichnungsebene ist derart gewählt, dass das Lochblech 11 bzw. 11' bezüglich seiner Dicke vollständig in der Ausnehmung 9 bzw. 9' versenkbar ist. Insofern steht das Lochblech 11 bzw. 11' aufgrund seiner geringeren Dicke im Vergleich zur Ausnehmung 9 bzw. 9' seitlich nicht über die Laufschiene 1 bzw. 1' hinaus, wodurch eine kompakte Bauform erreicht wird.

Durch die zwischen den Laufschienen 1 und 1' gelagerten Kugeln 3 entsteht ein Spalt 53 zwischen den Laufschienen 1 und 1'. Im Spalt 53 sind der Käfig 5 und das Zahnrad 7 angeordnet. Die Lochbleche 11 bzw. 11' sind derart ausgebildet, dass sie in den Spalt 53 hineinragen. Das Zahnrad 7 ist von seiner Größe her derart dimensioniert, dass es mit beiden Lochblechen 11 und 11' gleichzeitig in Wirkkontakt steht.

Die Lochbleche 11 bzw. 11' weisen in dem über den Spalt 53 ragenden Abschnitt Löcher auf (vgl. Fig. 1), die in der senkrecht zur Zeichnungsebene liegenden Richtung hintereinander regelmäßig beabstandet angeordnet sind. Größe und Abstand der Löcher des Lochblechs 11 bzw. 11' sind mit der Zahnung des Zahnrads 7 korrespondierend gewählt. Dadurch ist ein gegenseitiges Ineinandergreifen der Zahnung des Zahnrads 7 und der Löcher der Lochbleche 11 und 11' möglich, so dass der Käfig 5 durch das mit ihm drehbar verbundene Zahnrad 7 an den Lochblechen 11 und 11' und damit an beiden Laufschienen 1 und 1' zwangsgeführt ist. Ein unerwünschtes Wandern des Käfigs 5 bei linearer Bewegung der Laufschienen 1 und 11' gegeneinander wird dadurch effizient verhindert.

In einem alternativen Ausführungsbeispiel kann das Lochblech mit der Laufschiene durch Nieten oder Stifte verbunden sein.

### Bezugszeichenliste

- 1, 1': Laufschiene
- 3: Kugeln
- 5: Käfig
- 7: Zahnrad
- 9, 9': Ausnehmung
- 11, 11': Lochblech
- 13: Schraublöcher
- 15: Löcher
- 17: Lauffläche
- 51: Ausnehmung
- 53: Spalt

## Patentansprüche

1. Linearführung mit zwangsgeführtem Käfig (5), umfassend wenigstens zwei sich gegenüber liegende Laufschienen (1, 1'), die über Wälzkörper (3) gegeneinander verschiebbar gelagert sind, wobei die Wälzkörper (3) in wenigstens einem zwangsgeführtem Käfig (5) angeordnet sind, wobei die Zwangsführung wenigstens ein mit dem Käfig (5) verbundenes Zwangsführungselement aufweist, dass mit wenigstens zwei, jeweils einer der Laufschienen (1, 1') zugeordneten Eingriffsmitteln in Wirkkontakt steht, wobei die Eingriffsmittel entlang der einer Verschiebungsrichtung der Laufschienen (1, 1') axial ausgedehnt sind, wobei die Laufschienen (1, 1') jeweils wenigstens eine axial ausgedehnte Ausnehmung (9, 9') aufweisen, **dadurch gekennzeichnet, dass** sich die Ausnehmung (9, 9') an eine der jeweils anderen Laufschiene (1, 1') gegenüber liegenden Stirnfläche der Laufschiene (1, 1') anschließt und sich parallel zu einer Seitenfläche der Laufschiene (1, 1') erstreckt, wobei die Eingriffsmittel in der Ausnehmung (9, 9') gehaltert sind.

2. Linearführung nach Anspruch 1, bei der jedes Eingriffsmittel in einer einzigen Ausnehmung (9, 9') gehaltert ist.

3. Linearführung nach Anspruch 1, bei der die Laufschienen (1, 1') beabstandet angeordnet sind, wodurch ein Spalt (53) definiert wird und jedes der Eingriffsmittel derart angeordnet ist, dass ein mit dem Zwangsführungselement in Wirkkontakt stehender Abschnitt des Eingriffsmittels im Spalt (53) angeordnet ist.

4. Linearführung nach einem der obigen Ansprüche, bei der zu den beiden Laufschienen (1, 1') korrespondierende Eingriffsmittel auf gegenüber liegenden Seiten des Zwangsführungselements angeordnet sind.

5. Linearführung nach Anspruch 1 oder 2, bei der die Eingriffsmittel jeweils Ausnehmungen (9, 9') aufweisen und das Zwangsführungselement mit den Ausnehmungen (9, 9') korrespondierende Ausformungen aufweist, durch deren Zusammenwirken der Wirkkontakt entsteht.

6. Linearführung nach einem der obigen Ansprüche, bei der jedes der Zwangsführungselemente mit allen Eingriffsmitteln in Wirkkontakt steht.

7. Linearführung nach einem der obigen Ansprüche, bei der das Zwangsführungselement als Zahnrad (7) ausgeführt ist und die Eingriffsmittel als Zahnstange.

8. Linearführung nach einem der obigen Ansprüche, bei der das Zwangsführungselement als Zahnrad (7) ausgeführt ist und die Eingriffsmittel als Lochblech (11, 11').

9. Linearführung nach einem der obigen Ansprüche, bei der das Zahnrad (7) parallel zu den Außenflächen der Laufschienen (1, 1') angeordnet und drehbar mit dem Käfig (5) verbunden ist.

10. Linearführung nach einem der obigen Ansprüche, bei der die Eingriffsmittel und die Ausnehmung (9, 9') derart dimensioniert sind, dass die Tiefe der Ausnehmung (9, 9') parallel zur Stirnfläche größer ist als die entsprechende Dicke der Eingriffsmittel.
